# EUROPÄISCHE PATENTSCHRIFT

(11) **EP 0 916 466 B1**
(45) Veröffentlichungstag und Bekanntmachung des Hinweises auf die Patenterteilung: **10.10.2001**
(21) Anmeldenummer: 97119967.4
(22) Anmeldetag: 14.11.1997
(51) Int. Cl.: B29C 45/00, G05B 19/418, G06F 17/00, B29C 45/76

(54) **Spritzgiessmaschine mit LAN Schnittstelle**
LAN connected injection molding machine
Machine d'injection avec connexion LAN

(43) Veröffentlichungstag der Anmeldung: 19.05.1999
(73) Patentinhaber: ENGEL MASCHINENBAU GESELLSCHAFT MBH, A-4311 Schwertberg (AT)
(72) Erfinder: Kastner, Engelbert, 4320 Perg (AT)
(74) Vertreter: Torggler, Paul Norbert, Dr.

(56) Entgegenhaltungen:
- WO-A-97/26587
- DE-A- 19 617 181
- JP-A- 4 175 116
- JP-A- 4 175 132
- JP-A- 8 022 494
- JP-A- 9 108 999
- US-A- 5 301 120

## Beschreibung

Die Erfindung betrifft eine Spritzgießmaschine mit einer einen Mikroprozessor umfassenden SPS zur programmgesteuerten Ansteuerung der Aktuatoren der Spritzgießmaschine und einer in die Spritzgießmaschine integrierten Bedieneinheit, welche mit der SPS zur Datenübertragung über eine Datenleitung verbunden ist, wobei die Bedieneinheit einen eigenen, vom Mikroprozessor der SPS verschiedenen Mikroprozessor, eine Anzeige zur Darstellung von von der SPS empfangenen Istwerte des Maschinenzustandes und eine Eingabevorrichtung zur Eingabe von an die SPS zu übertragende Sollwerte der Spritzgießparameter umfaßt Weiters betrifft die Erfindung Verfahren zur Datenübertragung zwischen einer einen Mikroprozessor umfassenden SPS und einer einen gesonderten Mikroprozessor aufweisenden Bedieneinheit einer Spritzgießmaschine, wobei e Datenübertragung die Übertragung von in die Bedieneinheit eingegebenen Sollwerten der Spritzgießparameter an die SPS umfaßt, in Abhängigkeit von denen sowie von Istwerten, welche von Sensoreinrichtungen an die SPS ausgegeben werden, die SPS Steuersignale an Aktuatoren der Spritzgießmaschine ausgibt.

Neben Bedieneinheiten von Spritzgießmaschinen, die keine "Intelligenz", also keinen Mikroprozessor aufweisen, sind auch Bedieneinheiten bekannt, die einen Mikroprozessor umfassen, auf dem die Programme ablaufen, die die Schnittstelle zwischen Mensch und Maschine bilden. Dies sind insbesondere Programme zur Anzeige von Prozeßdaten, welche von Sensoren der Spritzgießmaschine erfaßt werden und der SPS als Istwerte zugeführt werden, sowie Programme zur Eingabe von Sollwerten von Spritzgießparametern, welche in die Bedieneinheit eingegeben werden und an die SPS übertragen werden. In Abhängigkeit von diesen Sollwerten steuert bzw. regelt die SPS die Aktuatoren der Spritzgießmaschine.

Die Verbindung zwischen einer SPS und einer Bedieneinheit einer Spritzgießmaschine erfolgt herkömmlicherweise über einen internen parallelen Synchronbus oder, im Falle einer "intelligenten" Bedieneinheit, über eine serielle "Punkt-zu-Punkt-Verbindung" zwischen dem Mikroprozessor der Bedieneinheit und dem Mikroprozessor der SPS. Solche serielle "Punkt-zu-Punkt-Verbindungen" werden durch jeweils eine SIO (serial input-output)-Schnittstelle in der SPS und in der Bedieneinheit vermittelt, wobei diese SIO über ein für die spezielle Art der SIO-Schnittstelle geeignetes Kabel verbunden werden. Eine Mehrzahl von international genormten seriellen Verbindungen sind bekannt, welche jeweils spezifische Anforderungen an die SIO-Schnittstelle und das verwendete Kabel (z.B. Zahl der Pole, Länge, Material, Schirmung) stellen.

Bei Gummispritzgießanlagen ist es weiters bekannt, mehrere Spritzgießmaschinen mit einem Zentralrechner zu einem lokalen Netzwerk zu verbinden. Dieser Zentralrechner kann Steuerungsfunktionen sowie Aufgaben der Dateneingabe, Datenerfassung und Datenanzeige übernehmen. Jede der zu einem lokalen Netz zusammengeschlossenen Spritzgießeinheiten weist daneben eine interne Bedieneinheit zur lokalen Bedienung der Spritzgießmaschine auf, wobei die interne Verbindung zwischen der SPS der Spritzgießmaschine und der internen Bedieneinheit der Spritzgießmaschine auf herkömmliche Weise erfolgt.

Aufgabe der Erfindung ist es, eine einfache und zuverlässige Art der internen Datenübertragung zwischen SPS und Bedieneinheit der Spritzgießmaschine zu ermöglichen und auf einfachere Weise als bei den herkömmlichen Spritzgießmaschinen eine Kommunkationsmöglichkeit mit externen Geräten bereitzustellen.

Erfindungsgemäß gelingt dies bei einer Spritzgießmaschine nach Anspruch 1.

Die Grundidee der Erfindung ist es also, bereits für die interne Datenübertragung innerhalb der Spritzgießmaschine, konkret zwischen SPS und Bedieneinheit der Spritzgießmaschine eine LAN-Netzwerkarchitektur bereitzustellen. Hardwaremäßig existieren verschiedene Typen solcher Netzwerkarchitekturen, beispielsweise das bekannte Ethernet. Diese Netzwerktechnologien sind sehr ausgereift und ermöglichen eine einfache und effektive Kommunkation, vorzugsweise nach dem Client-Server-Prinzip, der miteinander verbundenen Mikroprozessoren.

Soll die Spritzgießmaschine mit externen Computern verbunden werden, so kann das bereits vorhandene "interne lokale Netz" der Spritzgießmaschine zur einfachen Anbindung dieser externen Computer über eine Erweiterung des internen LANs genutzt werden, ohne daß wie bei herkömmlichen Spritzgießmaschinen ein weiterer unterschiedlicher Typ von Kommunkations-Hardware und Software notwendig ist. Durch diese erfindungsgemäße Vereinheitlichung der internen und externen Kommunikation wird somit auch der Anschluß von externen Komponenten gegenüber herkömmlichen Spritzgießmaschinen bedeutend vereinfacht und wesentlich flexibler gestaltet. Durch Verwendung des TCP/IP-Transport-Protokolls kann weiters Kompatibilität zur Internet-Technologie erreicht werden. Diese stellt einerseits einen weit verbreiteten Standard dar, andererseits können Bediencomputer (insbesondere zur Visualisierung) oder Ressourcen über das Internet in die Spritzgießmaschine eingebunden werden.

Anzumerken ist, daß erfindungsgemäß unter LAN kein Feldbussystem verstanden wird. Ein Feldbus ist ein Sensor-Aktor-Bus, der durch kurze Datenpakete und Echtzeitfähigkeit gekennzeichnet ist. Bei einem CAN-Bus beispielsweise werden pro Datenpaket maximal 8 Byte Nutzdaten übertragen, und dieser Wert ist bei anderen Feldbussystemen in der gleichen Größenordnung. LANs im Sinne der Erfindung, die auch als "Standard-LAN" oder "Bürobus" bezeichnet werden, weisen dagegen wesentlich längere Datenpakete auf ( in der Größenordnung von 1000 Byte beispielsweise beim Ethernet) und sie besitzen keinesfalls Echtzeitverhalten.

Weitere Vorteile und Einzelheiten der Erfindung werden im folgenden anhand der beiliegenden Zeichnung erläutert.

In dieser zeigen:
Fig. 1 eine Blockdarstellung einer erfindungsgemäßen Spritzgießmaschine und
Fig. 2 eine Blockdarstellung zur Verdeutlichung des Informationsflusses innerhalb der Spritzgießmaschine und zu und von angeschlossenen externen Computern.

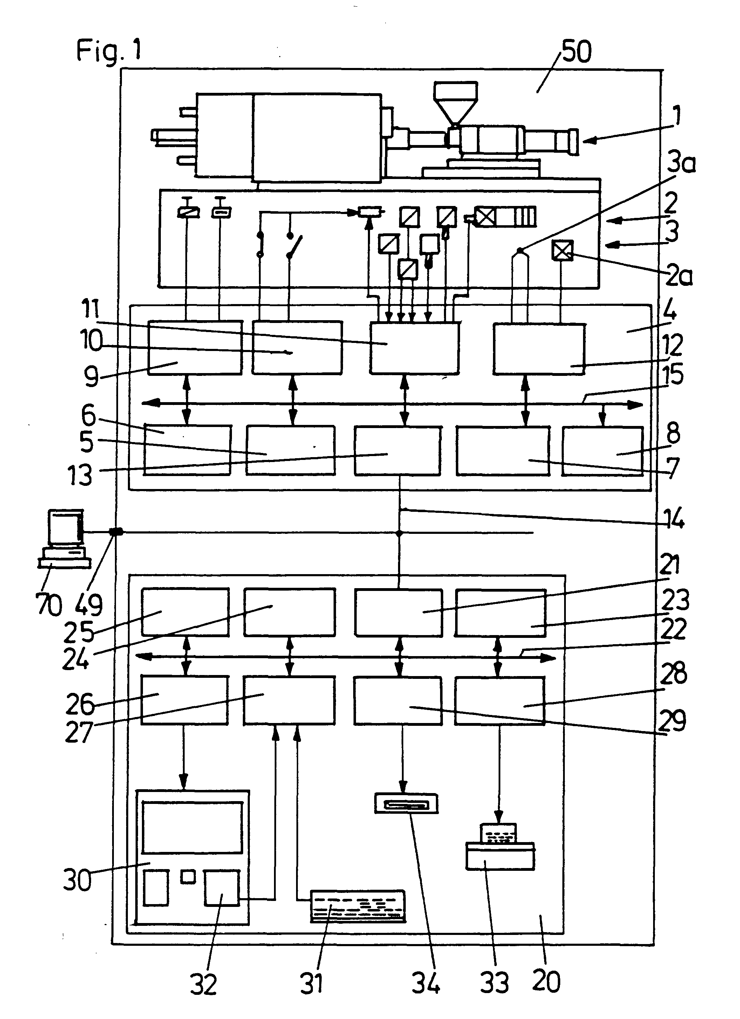

Die in Fig. 1 gezeigte Blockdarstellung einer erfindungsgemäßen Spritzgießmaschine 50 zeigt in schematischer Form die Maschinenelemente 1, welche den eigentlichen Spritzgießprozeß ausführen, sowie die Aktuatoren und Sensoren 2, 3, wobei über die Aktuatoren die Maschinenelemente 1 angesteuert werden können und über die Sensoren 3 die Istwerte der Prozeßparameter erfaßt werden. Beispielsweise kann über einen Triak 2a ein Heizkreislauf geschlossen werden und über einen Temperaturfühler 3a die Temperatur des Granulats in der Schnecke erfaßt werden. Da diese Teile 1, 2 der Spritzgießmaschine dem Stand der Technik entsprechen und hinreichend bekannt sind, wird hier nicht weiter auf sie eingegangen.

Zur Steuerung des Spritzgießprozesses weist die Spritzgießmaschine 50 eine SPS 4 auf. Diese umfaßt einen Mikroprozessor 5 (vorzugsweise einen MIPS-Prozessor), einen ROM-Speicher 6, einen statischen RAM-Speicher 7, einen dynamischen RAM-Speicher 8, ein (in Fig. 1 nicht dargestellter) Flash-Speicher sowie eine Reihe von Ein-und Ausgängen, wobei die einzelnen Bausteine über einen lokalen Synchronbus 15 oder Feldbus (vorzugsweise CAN-Bus) miteinander kommunizieren. Zur Bereitstellung der Ausgänge ist eine Digitalausgangskarte 9, eine Digitaleingangskarte 10, eine analoge Eingangs/Ausgangskarte 11 sowie ein Temperaturregler 12 vorgesehen. Über die Ausgänge werden die Aktuatoren 2 angesprochen und über die Eingänge werden die von den Sensoren 3 erfaßten Istwerte des Maschinenzustandes eingelesen. Solche Istwerte sind beispielsweise Istwerte für Wege, Hydraulikdrücke, Forminnendrücke, Temperaturen, ... Die erfaßten Istwerte werden im dynamischen RAM-Speicher 7 gespeichert, Sollwerte von Prozeß- bzw. Spritzgießparametem werden im statischen RAM-Speicher abgelegt. Beispiele für solche Spritzgießparameter sind Wegesollpositionen, Geschwindigketisvorgaben, Solltemperaturen, ... Im ROM-Speicher 6 und im Flash-Speicher sind die SPS-Programme zur Steuerung bzw. Regelung des Spritzgießprozesses gespeichert.

Die SPS umfaßt weiters eine LAN-Schnittstelle 13 in der Form eines Ethernet-Adapters, an die eine Netzwerkleitung 14 angeschlossen ist, die von einem Ethernet-Kabel gebildet wird. Diese Netzwerkleitung 14 ist mit einer weiteren LAN-Schnittstelle 21 einer Bedieneinheit 20 verbunden, wobei die LAN-Schnittstelle 21 ebenfalls als Ethernet-Adapter ausgebildet ist. Die LAN-Schnittstellen 13, 21 sowie die Netzwerkleitung können dabei als Standard-Ethernet-Komponenten oder als Fast-Ethernet-Komponenten (mit einer Übertragungsrate von 100 Mbit/s) ausgebildet sein.

Die LAN-Schnittstelle 21 ist über einen lokalen Synchronbus 22 mit einem Mikroprozessor 23 (vorzugsweise einen MIPS-Prozessor) der Bedieneinheit 20 verbunden. An den lokalen Bus 22 sind weiters ein dynamischer RAM-Speicher 24, ein ROM-Speicher 25, eventuell ein (nicht dargestellter) Flash-Speicher, eine Graphikschnittstelle 26, eine Tastatur-Maus-Schnittstelle 27, eine Druckerschnittstelle 28 und eventuell eine Massenspeicherschnittstelle 29 angeschlossen. Im ROM-Speicher 25 sind Boot-Programme gespeichert, welche beim Einschalten der Bedieneinheit ausgeführt werden. Mit der Graphikschnittstelle 26 ist eine Anzeigevorrichtung 30 verbunden, an die Tastatur-Maus-Schnittstelle 27 sind eine Tastatur 31 und eine Maus bzw. ein anderes Zeigerinstrument 32 angeschlossen und an die Druckerschnittstelle 28 ist ein Drucker 33 angeschlossen. Falls eine Massenspeicherschnittstelle 29 vorgesehen ist, kann an diese ein Massenspeicher 34 angeschlossen werden.

Es ist zu bemerken, daß sowohl die SPS 4 als auch die Bedieneinheit 20 integrale Bestandteile der Spritzgießmaschine 50 sind und in dieser in ein Gehäuse eingebaut sind. Die Spritzgießmaschine weist weiters einen mit dem Netzwerkkabel 14 verbundenen Anschluß 49 auf, der zur Verbindung der Spritzgießmaschine mit einem oder mehreren externen Computern 70 dient, wie weiter unten noch genauer ausgeführt wird.

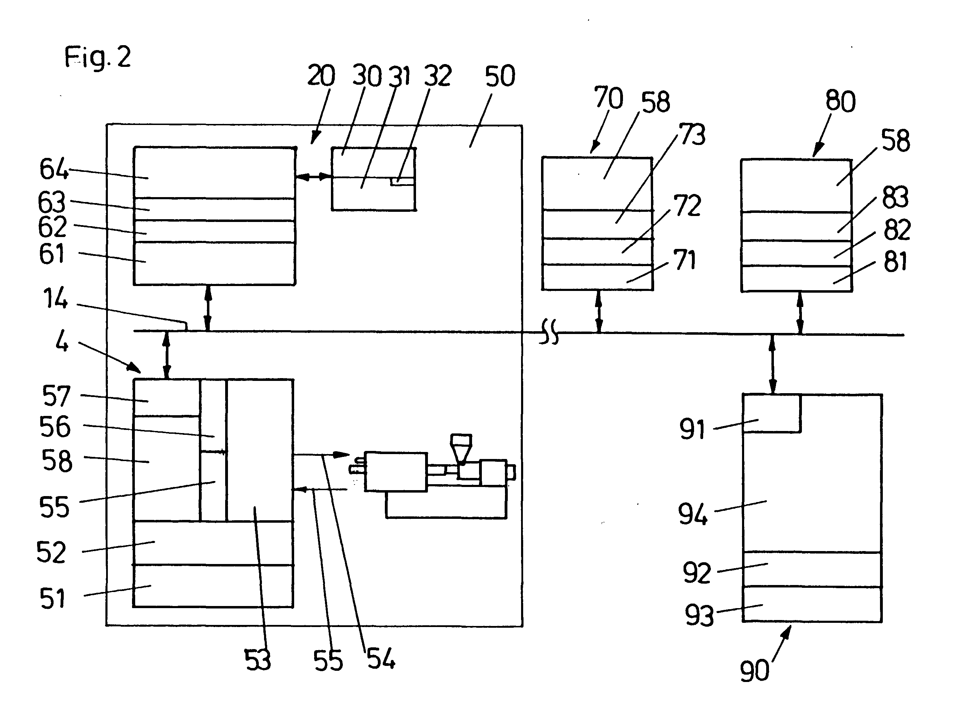

Der Informationsfluß innerhalb der Spritzgießmaschine soll im folgenden anhand der Fig. 2 erläutert werden. Der Befehlsstruktur 51 des Mikroprozessors 5 der SPS 4 ist ein Echtzeit-Betriebssystem 52 überlagert. Im ROM-Speicher 6 und im Flash-Speicher der SPS 4 sind die SPS-Programme 52 enthalten, welche die eigentliche SPS-Ablaufsteuerung bilden. Die SPS-Programme geben Steuerbefehle 54 an die Aktuatoren 2 aus und erhalten als Eingangssingale von den Sensoreinrichtungen 3 Istwerte 55 der Prozeßdaten. Weiters können über zusätzliche, nicht dargestellte Sensoreingänge der SPS auch Befehle zur Maschinensteuerung eingegeben werden, beispielsweise "Maschine aus" bzw. "Maschine ein" oder manuelle Steuerbefehle.

Die im statischen RAM 7 der SPS gespeicherten Daten umfassen Sollwerte 56 der Spritzgießparameter. In Abhängigkeit von diesen Sollwerten 56 der Spritzgießparameter und der von den Sensoreinrichtungen 3 ausgegebenen Istwerte des Prozesses bestimmen die SPS-Programme 53 die an die Aktuatoren auszugebenden Steuersignale 54. Weiters können im dynamischen RAM 8 der SPS 4 die Istwerte 55 des Prozesses zwischengespeichert werden.

In einem anderen Zeitfenster des Echtzeit-Betriebssystems 52 läuft ein Programm, durch das die SPS 4 als HTTP-Server 57 arbeitet. Auf diesen HTTP-Server 57 kann über die Netzwerkleitung 14 durch ein auf der Bedieneinheit 20 laufendes Client-Programm, das in diesem Fall als Web-Browser bezeichnet wird, zugegriffen werden. Als Transport-Protokoll zur Datenübertragung über die Netzwerkleitung 14 wird das TCP/IP-Transport-Protokoll verwendet, wodurch die Verwendung des HTTP-Übertragungs-Protokolls zur Datenübertragung zwischen SPS 4 und Bedieneinheit 20 erst ermöglicht wird. Auf diese Weise wird eine Kompatibilität der internen Datenübertragung der Spritzgießmaschine zur Internet-Technologie erreicht. Weiters sind im statischen RAM 7 oder im Flash-Speicher der SPS-Bedienprogramme 58 in Form von plattform-unabhängigen Java-Programmen gespeichert, deren Funktion weiter unten erläutert wird.

Die Befehlsstruktur 61 des Mikroprozessors 23 der Bedieneinheit 20 wird von einem Betriebssystem 62 verwaltet. Unter diesem Betriebssystem 62 arbeitet ein Web-Browser 63, mit dem der HTTP-Server 57 über die LAN-Schnittstellen 13, 21 und die Netzwerkleitung 14 ansprechbar ist, sodaß die Bedieneinheit 20 zu einem Client der als Server arbeitenden SPS 4 wird. Mit einem Web-Browser können HTML-formatierte Dokumente geladen werden. Wenn dieses Laden über eine Netzwerkverbindung erfolgt, wird das HTTP-Übertragungs-Protokoll verwendet. Der Web-Browser 63 stellt außerdem eine Funktion zum Ausführen von Java-Programmen, d.h. eine "Java-Virtual-Machine" bereit. Somit können im RAM-Speicher 24 der Bedieneinheit gespeicherte Bedienprogramme 64 in der Form von Java-Programmen geladen und ausgeführt werden. Diese Bedienprogramme können, beispielsweise beim Starten des Systems, von der SPS 4 geladen werden. Die als Server arbeitende SPS stellt somit ihre eigenen Bedienprogramme bereit, die neben der Bedieneinheit auch von einem anderen an die Spritzgießmaschine angeschlossenen Client abgerufen werden können, wie weiter unten noch erläutert wird. Mittels dieser Bedienprogramme 64 können Daten an der Anzeigevorrichtung 30 der Bedieneinheit 20 gesichtet werden sowie Sollwerte über die Tastatur 31 bzw. das Zeigerinstrument 32 eingegeben bzw. ausgewählt werden, wobei diese Sollwerte vom Bedienprogramm an die SPS übertragen werden. Weiters ist es möglich, daß Bedienprogramme lokal auf der Bedieneinheit (z. B. auf deren Massenspeicher) gespeichert sind und auch von dort vom Browser geladen werden.

Aufgrund der internen Netzwerkstruktur der Spritzgießmaschine können in einfacher Weise weitere Bediencomputer 70, 80, welche insbesondere zur Visualisierung von Prozeßdaten dienen können, an die Spritzgießmaschine angeschlossen werden, welche zu diesem Zweck den Anschluß 49 aufweist (vgl. Fig. 1). Eine Verbindung zwischen der Spritzgießmaschine 50 und den externen Bediencomputern 70, 80 kann beispielsweise über Modems und die Telefonleitung erfolgen. Über einen (nicht dargestellten) Gateway-Rechner ist auch ein Anschluß ans Internet möglich. Die jeweilige Hardware 71, 81 dieser externen Bediencomputer 70, 80 ist ebenso wie das jeweilige Betriebssystem 72, 82 beliebig wählbar, solange ein entsprechender Web-Browser 73, 83 zur Verfügung steht, der eine "Java-Virtual-Machine" bereitstellt. Mittels dieser Web-Browser 73, 83 der externen Bediencomputer 70, 80 können wiederum von dem HTTP-Server 57 der SPS 4 die in der SPS gespeicherten Bedienprogramme 58 geladen werden. Dadurch können an den externen Bediencomputern 70, 80 prinzipiell alle Visualisierungs- und Dateneingabeaufgaben durchgeführt werden. Die Eingabe von Sollwerten von externen Computern aus wird aber normalerweise gesperrt sein, um Fehlbedienungen der Spritzgießmaschine zu vermeiden.

Es ist weiters möglich, einen externen Computer 90 mit einer hohen Rechenleistung anzuschließen, der über ein entsprechendes Server-Programm 91 einen weiteren HTTP-Server bildet. Auf diesem Computer 90 können Technologieprogramme 24 ausgeführt werden, welche eine hohe Rechenleistung benötigen. Solche Technologieprogramme werden beispielsweise zur Ermittlung der Sollwerte der Spritzgießparameter für ein bestimmtes Spritzgußteil verwendet. Über den Web-Browser 63 der Bedieneinheit 20 der Spritzgießmaschine kann auf diese Technologieprogramme zugegriffen werden, es kann also ihre Benutzeroberfläche an der Anzeigevorrichtung 30 der Bedieneinheit angezeigt werden, Werte können über die Tastatur 31 eingegeben werden und Berechnungsergebnisse an der Anzeigevorrichtung 30 ausgegeben werden. Auf diese Weise kann die Rechenleistung des externen Computers 90 in die Bedieneinheit 20 der Spritzgießmaschine eingebunden werden. Hardware 93 und Betriebssystem 92 des externen Computers 90 sind dabei wiederum frei wählbar. Es steht damit praktisch eine Spritzgießmaschine zur Verfügung, deren Bedieneinheit durch die Einbindung eines oder mehrerer externer Rechner eine im Prinzip beliebig erweiterbare Rechenleistung aufweist. Damit werden beispielsweise Aufgaben direkt an der Bedieneinheit der Spritzgießmaschine durchführbar, für die bisher der Arbeitsplatz verlassen werden mußte.

Zusätzlich ist es günstig, wenn am SPS-Rechner ein FTP-Server und eventuell ein Mail-Client laufen.

Der FTP-Server (FTP = File Transfer Protocol) ermöglicht es angeschlossenen Clients, Gesamtdateien von der SPS abzuholen bzw. an sie zu schicken. Die Kommunikation mit dem FTP-Server bzw. die Bedienung des FTP-Servers erfolgt mit Hilfe des Web-Browser der Clients. (Beispielsweise: Einstelldatensätze, ...) Der auf der SPS installierte Mail-Client soll es dem Bediener an der Maschine ermöglichen, Mails zu empfangen bzw. zu versenden. Diese Mails könnten u. a. Bedienhinweise oder Produktionszustands-Informationen enthalten.

Zusätzlich kann die SPS im Fehlerfall automatisch Mails mit den entsprechenden Zusatzinformationen an definierte Adressen (z. B. Instandhaltungspersonal) versenden. Voraussetzung ist ein existierender Mail-Server in dem Netzwerk, in dem die Spritzgießmaschine eingebunden ist.

Prinzipiell könnte auch darauf verzichtet werden, die Bedienprogramme 58 im Speicher der SPS bereitzustellen. Die Bedienprogramme müßten dann im Speicher der Bedieneinheit vollständig vorliegen und auch externe angeschlossene Computer müßten diese Bedienprogramme (zumindest ein Teil davon) gespeichert haben, um die SPS zu visualisieren (oder fernzubedienen).

Verschiedene weitere Modifikationen der beschriebenen Spritzgießmaschine bzw. des beschriebenen Verfahrens zur internen Datenübertragung innerhalb einer Spritzgießmaschine sind denkbar und möglich, ohne den Bereich der Erfindung zu verlassen. Beispielsweise könnte an Stelle des HTTP-Servers und Web-Browsers eine andere Art der Client-Server-Architektur gewählt werden. Anstelle des TCP/IP-Übertragungsprotokolles könnte ein anderes Übertragungsprotokoll des lokalen Netzwerkes verwendet werden. Es können andere LAN-Schnittstellen als die genannten Ethernet-Adapter gewählt werden. Weiters könnten zusätzliche interne Komponenten der Spritzgießmaschine vorgesehen sein, die an das "interne lokale Netz" der Spritzgießmaschine angeschlossen sind.

## Patentansprüche

1. Spritzgießmaschine mit einer einen Mikroprozessor (5) umfassenden SPS (4) zur programmgesteuerten Ansteuerung der Aktuatoren (3) der Spritzgießmaschine und einer in die Spritzgießmaschine integrierten Bedieneinheit (20), welche mit der SPS (4) zur Datenübertragung über eine Datenleitung verbunden ist, wobei die Bedieneinheit (20) einen eignen, vom Mikroprozessor (5) der SPS (4) verschiedenen Mikroprozessor (23), eine Anzeigevorrichtung (30) zur Darstellung von von der SPS (4) empfangenen Istwerten des Maschinenzustandes und eine Eingabevorrichtung (31, 32) zur Eingabe von an die SPS (4) zu übertragende Sollwerte der Spritzgießparameter umfaßt, **dadurch gekennzeichnet, daß** die SPS (4) und die Bedieneinheit (20) der Spritzgießmaschine zumindest für die interne Datenübertragung zwischen der SPS und der Bedieneinheit jeweils eine LAN-Schnittstelle (13, 21) aufweisen und über eine Netzwerkleitung (14) zu einem lokalen Netzwerk zusammengeschlossen sind.

2. Spritzgießmaschine nach Anspruch 1, **dadurch gekennzeichnet, daß** die LAN-Schnittstelle (13, 21) ein Ethernet-Adapter ist.

3. Spritzgießmaschine nach Anspruch 1 oder 2, **dadurch gekennzeichnet, daß** das lokale Netzwerk, welches die SPS (4) und die Bedieneinheit (20) umfaßt, einen Anschluß (49) zur Erweiterung des lokalen Netzwerkes durch einen der mehreren externen Computer (70, 80, 90) aufweist.

4. Verfahren zur Datenübertragung zwischen einer einen Mikroprozessor (5) umfassenden SPS (4) und einer einen gesonderten Mikroprozessor (23) aufweisenden Bedieneinheit (20) einer Spritzgießmaschine, wobei die Datenübertragung die Übertragung von in die Bedieneinheit (20) eingegebenen Sollwerten der Spritzgießparameter an die SPS (4) umfaßt, in Abhängigkeit von denen sowie von Istwerten, welche von Sensoreinrichtungen (3) an die SPS ausgegeben werden, die SPS (4) Steuersignale (54) an Aktuatoren (2) der Spritzgießmaschine ausgibt, **dadurch gekennzeichnet, daß** die SPS (4) und der Mikroprozessor (23) der Bedieneinheit (20) zumindest für die interne Datenübertragung zwischen der SPS und der Bedieneinheit über ein lokales Netzwerk kommunizieren.

5. Verfahren nach Anspruch 4, **dadurch gekennzeichnet, daß** das lokale Netzwerk ein Ethernet ist.

6. Verfahren nach einem der Ansprüche 4 oder 5, **dadurch gekennzeichnet, daß** die SPS (4) einen Server und die Bedieneinheit (20) einen Client im lokalen Netzwerk bilden.

7. Verfahren nach Anspruch 6, **dadurch gekennzeichnet, daß** die SPS (4) als HTTP-Server (57) arbeitet und die Bedieneinheit (20) über einen Web-Browser (63) mit der SPS (4) kommuniziert.

8. Verfahren nach einem der Ansprüche 4 bis 7, **dadurch gekennzeichnet, daß** an das lokale Netzwerk, welches die SPS (4) und die Bedieneinheit (20) umfaßt, ein oder mehrere externe Computer (70, 80, 90) anschließbar sind.

9. Verfahren nach Anspruch 8, **dadurch gekennzeichnet, daß** einer der externen Computer (90) einen weiteren Server, vorzugsweise HTTP-Server (91) bereitstellt, an dem Technologieprogramme (94) ausführbar sind, deren Benutzeroberfläche bzw. deren Berechnungsergebnisse von der Bedieneinheit (20) der Spritzgießmaschine abgefragt und angezeigt wird bzw. werden.

10. Verfahren nach einem der Ansprüche 4 bis 7, **dadurch gekennzeichnet, daß** zur Kommunikation über das lokale Netzwerk das TCP/IP-Transport-Protokoll verwendet wird.

11. Verfahren nach einem der Ansprüche 4 bis 10, **dadurch gekennzeichnet, daß** die Datenübertragung zwischen der SPS (4) und der Bedieneinheit (20) über die Übertragung von Istwerten des Spritzgießprozesses umfaßt, welche von den Sensoreinrichtungen (2) an die SPS (4) übertragen werden und welche an einer Anzeigevorrichtung (30) der Bedieneinheit (20) angezeigt werden.

12. Verfahren nach Anspruch 8, **dadurch gekennzeichnet, daß** einer der externen Computer (70, 80) einen weiteren Client darstellt, an dessen Anzeigevorrichtung von der SPS (4) empfangene Daten anzeigbar sind und/oder in dessen Eingabevorrichtung an die SPS (4) zu übertragende Sollwerte von Spritzgießparametern eingebbar sind.

13. Verfahren nach einem der Ansprüche 4 bis 12, **dadurch gekennzeichnet, daß** in der SPS (4) Bedienprogramme (58) zum Anzeigen von von der SPS (4) empfangene Daten und/oder zur Eingabe von an die SPS (4) zu übertragende Sollwerte von Spritzgießparametern gespeichert sind, welche von der Bedieneinheit (20) oder einem externen Computer (70, 80), der einen weiteren Client darstellt, ladbar sind.

14. Verfahren nach Anspruch 13, **dadurch gekennzeichnet, daß** die Bedienprogramme (58) in einem plattformunabhängigen Code, vorzugsweise als Java-Programme, vorliegen.

15. Verfahren nach einem der Ansprüche 4 bis 14, **dadurch gekennzeichnet, daß** auf der SPS (4) ein FTP-Server-Programm läuft.

16. Verfahren nach einem der Ansprüche 4 bis 15, **dadurch gekennzeichnet, daß** auf der SPS (4) ein Mail-Client-Programm läuft.

## Claims

1. An injection moulding machine having an SPC (4) including a microprocessor (5) for program-controlled operation of the actuators (3) of the injection moulding machine and an operating unit (20) which is integrated into the injection moulding machine and which is connected to the SPC (4) for data transmission by way of a data line, wherein the operating unit (20) includes its own microprocessor (23) which is different from the microprocessor (5) of the SPC (4), a display device (30) for the representation of actual values of the machine condition which are received by the SPC (4) and an input device (31, 32) for the input of reference values of the injection moulding parameters, which reference values are to be transmitted to the SPC (4), **characterised in that** the SPC (4) and the operating unit (20) of the injection moulding machine each have a respective LAN-interface (13, 21) at least for the internal data transmission between the SPC and the operating unit and are connected together by way of a network line (14) to form a local network.

2. An injection moulding machine according to claim 1 **characterised in that** the LAN-interface (13, 21) is an Ethernet adapter.

3. An injection moulding machine according to claim 1 or claim 2 **characterised in that** the local network which includes the SPC (4) and the operating unit (20) has a connection (49) for expansion of the local network by an external computer (70, 80, 90).

4. A method of data transmission between an SPC (4) including a microprocessor (5) and an operating unit (20) of an injection moulding machine, which has a separate microprocessor (23), wherein the data transmission includes the transmission to the SPC (4) of reference values of the injection moulding parameters, which are inputted into the operating unit (20), in dependence on which and on actual values which are outputted by sensor devices (3) to the SPC (4) the SPC (4) outputs control signals (54) to actuators (2) of the injection moulding machine, **characterised in that** the SPC (4) and the microprocessor (23) of the operating unit (20) communicate by way of a local network at least for internal data transmission between the SPC and the operating unit.

5. A method according to claim 4 **characterised in that** the local network is an Ethernet.

6. A method according to one of claims 4 and 5 **characterised in that** the SPC (4) forms a server and the operating unit (20) forms a client in the local network.

7. A method according to claim 6 **characterised in that** the SPC (4) operates as an HTTP-server (57) and the operating unit (20) communicates with the SPC (4) by way of a web browser (63).

8. A method according to one of claims 4 to 7 **characterised in that** one or more external computers (70, 80, 90) can be connected to the local network which includes the SPC (4) and the operating unit (20).

9. A method according to claim 8 **characterised in that** one of the external computers (90) provides a further server, preferably an HTTP-server (91), at which technology programs (94) can be executed, whose user surface or whose user results is or are interrogated and displayed by the operating unit (20) of the injection moulding machine.

10. A method according to one of claims 4 to 7 **characterised in that** the TCP/IP transport protocol is used for the communication by way of the local network.

11. A method according to one of claims 4 to 10 **characterised in that** the data transmission between the SPC (4) and the operating unit (20) includes the transmission of actual values of the injection moulding process, which are transmitted by the sensor devices (2) to the SPC (4) and which are displayed at a display device (30) of the operating unit (20).

12. A method according to claim 8 **characterised in that** one of the external computers (70, 80) represents a further client, at the display device of which data received from the SPC (4) can be displayed and/or into the input device of which reference values of injection moulding parameters, which are to be transmitted to the SPC (4), can be inputted.

13. A method according to one of claims 4 to 12 **characterised in that** stored in the SPC (4) are operating programs (58) for the display of data received by the SPC (4) and/or for the input of reference values of injection moulding parameters, to be transmitted to the SPC (4), which can be loaded by the operating unit (20) or an external computer (70, 80) which represents a further client.

14. A method according to claim 13 **characterised in that** the operating programs (58) are in a platform-independent code, preferably in the form of Java programs.

15. A method according to one of claims 4 to 14 **characterised in that** an FTP-server program runs on the SPC (4).

16. A method according to one of claims 4 to 15 **characterised in that** a mail client program runs on the SPC (4).

## Revendications

1. Machine de moulage par injection comportant un système SPS (4) comprenant un microprocesseur (5) pour la commande programmée des actionneurs (3) de la machine de moulage par injection, et une unité d'actionnement (20) intégrée dans la machine de moulage par injection et qui est reliée au système SPS (4) pour la transmission de données par l'intermédiaire d'une ligne de transmission de données, et dans laquelle l'unité d'actionnement (20) comporte un microprocesseur propre (23), qui diffère du microprocesseur (5) du système SPS (4), un dispositif d'affichage (30) pour représenter des valeurs réelles de l'état de la machine, reçues par le système SPS (4), et un dispositif d'entrée (31, 32) pour l'introduction de valeurs de consigne, qui doivent être transmises au système SPS (4) des paramètres de moulage sous pression, **caractérisé en ce que** le système SPS (4) et l'unité d'actionnement (20) de la machine de moulage par injection comportent chacun une interface LAN (13, 21), au moins pour la transmission interne de données entre le système SPS et l'unité d'actionnement et sont raccordés entre eux par l'intermédiaire d'une ligne de réseau (1) pour former un réseau local.

2. Machine de moulage par injection selon la revendication 1, **caractérisée en ce que** l'interface LAN (13, 31) est un adaptateur Ethernet.

3. Machine de moulage par injection selon la revendication 1 ou 2, **caractérisée en ce que** le réseau local, qui comprend le système SPS (4) et l'unité d'actionnement (20), comporte une borne (49) pour l'extension du réseau local au moyen de l'un de la pluralité d'ordinateurs externes (70, 80, 90).

4. Procédé de transmission de données à un système SPS (4) comprenant un microprocesseur (5) et une unité d'actionnement (20), comportant un microprocesseur particulier (23), d'une machine de moulage par injection, selon lequel la transmission des données comprend la transmission de valeurs de consigne, introduites dans l'unité d'actionnement (20), des paramètres de moulage par injection au système SPS (4), le système SPS (4) délivrant des signaux de commande (54) à des actionneurs (2) de la machine de moulage par injection, en fonction des valeurs de consigne ainsi que de valeurs réelles, qui sont délivrées au système SPS par des dispositifs de détection (3), **caractérisé en ce que** le système SPS (4) du microprocesseur (30) de l'unité d'actionnement (20) communique par l'intermédiaire d'un réseau local au moins pour la transmission interne de données entre le système SPS et l'unité d'actionnement.

5. Procédé selon la revendication 4, **caractérisé en ce que** le réseau local est un réseau Ethernet.

6. Procédé selon l'une des revendications 4 ou 5, **caractérisé en ce que** le système SPS (4) constitue un serveur et l'unité d'actionnement (20) constitue un client dans le réseau local.

7. Procédé selon la revendication 6, **caractérisé en ce que** le système SPS (4) travaille en tant que serveur HTTP (57) et que l'unité d'actionnement (20) communique avec le système SPS (4) par l'intermédiaire d'un navigateur (63) de la Toile Web.

8. Procédé selon l'une des revendications 4 à 7, **caractérisé en ce qu'**un ou plusieurs ordinateurs externes (70, 80, 90) peuvent être raccordés au réseau local, qui comprend le système SPS (4) et l'unité d'actionnement (20).

9. Procédé selon la revendication 8, **caractérisé en ce que** l'un des ordinateurs externes (90) fournit un autre serveur, de préférence un serveur HTTP (91), dans lequel des programmes technologiques (94) peuvent être exécutés et dont la surface d'utilisateur ou les résultats de calcul est (sont) interrogés(s) et affiché(s) par l'unité d'actionnement (20) de la machine de moulage par injection.

10. Procédé selon l'une des revendications 4 à 7, **caractérisé en ce que** pour la communication au moyen du réseau local on utilise le protocole de transport TCP/IP.

11. Procédé selon l'une des revendications 4 à 10, **caractérisé en ce que** la transmission de données entre le système SPS (4) et l'unité d'actionnement (20) inclut la transmission de valeurs réelles du processus de moulage par injection, qui sont transmises par les dispositifs de détection (2) au système SPS (4) et qui sont affichées dans un dispositif d'affichage (30) de l'unité d'actionnement (20).

12. Procédé selon la revendication 8, **caractérisé en ce que** l'un des ordinateurs externes (70, 80) représente un autre client, sur le dispositif d'affichage duquel peuvent être affichées des données reçues par l'unité SPS (4) et/ou dans le dispositif d'entrée duquel peuvent être introduites des valeurs de consigne de paramètres de moulage par injection, qui doivent être transmises au système SPS (4).

13. Procédé selon l'une des revendications 4 à 12, **caractérisé en ce que** dans le système SPS (4) sont mémorisés des programmes de service (58) pour l'affichage de données reçues par le système SPS (4) et/ou l'introduction de valeurs de consigne de paramètres de moulage par injection, qui peuvent être transmis au système SPS (4) et peuvent être chargés par l'unité d'actionnement (20) ou par un ordinateur externe (70, 80), qui représente un autre client.

14. Procédé selon la revendication 13, **caractérisé en ce que** les programmes de service (58) sont présents dans un code indépendant de la plateforme, de préférence sous la forme de programmes Java.

15. Procédé selon l'une des revendications 4 à 14, **caractérisé en ce qu'**un programme de serveur FTP agit dans le système SPS (4).

16. Procédé selon l'une des revendications 4 à 15, **caractérisé en ce qu'**un programme messagerie-client fonctionne dans le système SPS (4).
